# EUROPÄISCHE PATENTSCHRIFT

(11) **EP 1 404 557 B1**
(45) Veröffentlichungstag und Bekanntmachung des Hinweises auf die Patenterteilung: **17.11.2004**
(21) Anmeldenummer: 02754705.8
(22) Anmeldetag: 19.06.2002
(51) Int. Cl.: B60T 13/68, B60T 8/36, B60T 8/32, B60T 13/58

(54) **STEUERVORRICHTUNG FÜR EIN BREMSSYSTEM, INSBESONDERE EIN FAHRZEUGBREMSSYSTEM**
CONTROL DEVICE FOR A BRAKE SYSTEM, PARTICULARLY A VEHICLE BRAKE SYSTEM
SYSTEME DE COMMANDE POUR UN SYSTEME DE FREINAGE, EN PARTICULIER UN SYSTEME DE FREINAGE DE VEHICULE

(30) Priorität: 20.06.2001 DE 10129605
(43) Veröffentlichungstag der Anmeldung: 07.04.2004
(73) Patentinhaber: KNORR-BREMSE SYSTEME FÜR NUTZFAHRZEUGE GMBH, 80809 München (DE)
(72) Erfinder: HERGES, Michael, 70825 Korntal-Münchingen (DE); RÖTHER, Friedbert, 74389 Cleebronn (DE)
(74) Vertreter: Schönmann, Kurt, Dr.
(86) Internationale Anmeldenummer: PCT/EP2002/006731
(87) Internationale Veröffentlichungsnummer: WO 2003/000528

(56) Entgegenhaltungen:
- EP-A- 1 031 730
- WO-A-00/68049
- DE-A- 19 815 440

## Beschreibung

Die Erfindung betrifft eine Anordnung zur Steuerung eines Bremssystems eines Fahrzeugs, insbesondere eines Nutzfahrzeugs gemäß dem Oberbegriff von Anspruch 1.

Bremseinrichtungen für Fahrzeuge sind hinsichtlich ihres Aufbaus und der Funktionsweise in unterschiedlichen Ausführungen bekannt. Stellvertretend wird auf die nachfolgend genannten Druckschriften DE 197 46 342 A1 und DE 198 15 440 A1 verwiesen.

Die Druckschrift DE 197 46 342 A 1 offenbart beispielhaft eine druckmittelbetätigte Fahrzeugbremsanlage mit wenigstens einem ersten, der Hinterachse des Fahrzeuges zugeordneten Bremskreis und einem zweiten, der Vorderachse des Fahrzeuges zugeordneten Bremskreis. Dabei sind dem ersten Bremskreis als auch dem zweiten Bremskreis je zwei Bremszylinder und je eine Steuerventileinrichtung zugeordnet, über welche die Bremszylinder in Abhängigkeit von einem Steuerdruck mit einer dem jeweiligen Bremskreis zugeordneten Druckmittelquelle oder mit einer Druckmittelsenke verbindbar sind. Zur Steuerung des an den Bremszylindem anliegenden Druckes sind in der Regel Steuereinrichtungen vorgesehen, welche den einzelnen Bremskolben zugeordnet werden. Die Steuerung des Druckes an den Bremszylindem erfolgt dabei elektropneurnatisch und zusätzlich zur Gewährleistung einer sicheren Betriebsweise bei Ausfall der Elektronik rein pneumatisch. Die Betätigung im letztgenannten Fall erfolgt bekanntermaßen mechanisch. Dazu ist ein mit einem Bremswertgeber koppelbares Betätigungselement vorgesehen, über welches der Fahrer einen Wunsch nach Verzögerung beziehungsweise Erzeugung eines Bremsmomentes abgibt. Aus dem Fahrerwunsch wird ein entsprechendes Signal generiert, welches einem Eingang einer Steuereinrichtung zugeführt wird. In der Steuereinrichtung wird der am Bremszylinder aus dem Fahrerwunsch resultierende erforderliche Druck berechnet und mindestens ein Stellsignal zur Ansteuerung einer Einrichtung zur Erzeugung beziehungsweise Bereitstellung des Druckes erzeugt. Der dabei im Bremszylinder erforderliche bereitzustellende Druck wird mittels einem separaten Gerät, dem sogenannten Druckregelmodul erzeugt. Dieses umfasst eine Steuerkammer und eine Arbeitskammer, wobei die Steuerkammer mit einer Druckmittelquelle gekoppelt ist, während die Arbeitskammer mit dem Bremszylinder wenigstens mittelbar verbunden ist. Für den Fall des Ausfalls der Elektronik wird jedoch ein rein pneumatisches Rückfallsystem benötigt, das zumindest einen Backupkreis enthält. Dieses rein pneumatische Rückfallsystem ist dabei derart ausgebildet, dass dieses ein Betriebsbremsventil mit mindestens einer Arbeitskammer umfasst, die ebenfalls mit dem Bremszylinder gekoppelt ist. Die Betätigung erfolgt über das Betätigungselement, insbesondere weg- oder druckabhängig.

In der Fahrzeugindustrie ist es dabei üblich, die einzelnen Komponenten der Bremsanlage oder andere Systeme speziell auf die entsprechenden Einsatzerfordemisse einzelner Fahrzeugtypen anzupassen beziehungsweise abzustimmen, mit dem Ziel, das Einsatzverhalten dieser Fahrzeuge zu optimieren. Dazu ist es erforderlich, zahlreiche Varianten für Einzelkomponenten zu produzieren und vorzuhalten, welche dann entsprechend den Einsatzerfordemissen miteinander zu kombinieren sind. Dies bedeutet erheblich höhere Lagerhaltungskosten. Des weiteren bedingt die Kopplung der einzelnen Elemente einen höheren Leitungs- und Verkabelungsaufwand, welcher wiederum eine Fehlerquelle darstellen kann.

Eine Ausführung einer gattungsgemäßen Steueranordnung für eine Fahrzeugbremsanlage, welche diese Nachteile zumindest teilweise vermeidet, ist aus der Druckschrift DE 198 15 440 A1 bekannt. Bei dieser sind der Bremswertgeber und ein Teil der elektronischen Steuereinrichtung zu einer Baueinheit zusammengefaßt.

Die WO 00 68049 A beschreibt eine Bremsanlage eines Anhängers mit einen pneumatisch betätigten Druckkreis, welcher durch eine Anti-Blockier-System (ABS-) Funktion erweitert ist. Dabei sind ein die ABS-Funktion steuemdes elektronisches Steuermodul (ECM) und ein pneumatisches Steuermodul (PCM) zu einer Baueinheit zusammengefaßt, in welchem jedoch nicht ein entfernt angeordnetes Relaisventil enthalten ist, durch welches Luft aus einem Reservoir zu den Bremskammem der Bremszylinder geliefert wird. Bei einem solchen Anti-Blockier-System handelt es sich um ein System, in welchem durch eine elektronische Steuereinrichtung der Radschlupf beim Bremsen unabhängig vom Fahrerwunsch, d.h. ohne jegliche Einflußnahmemöglichkeit seitens des Fahrers auf einen optimalen Wert eingeregelt wird. Hingegen bildet die elektronische Steuereinrichtung gemäß der DE 198 15 440 A1 einen Teil des elektro-pneumatischen Druckkreises, mit welchem ein vom Fahrerwunsch abhängiger Bremsdruck erzeugt wird.

Der Erfindung liegt demgegenüber die Aufgabe zugrunde, eine Steueranordnung für ein Bremssystem eines Fahrzeuges derart weiterzuentwickeln, dass neben einer Verringerung der Anzahl einzelner Bauelemente der zur Verfügung stehende Bauraum noch besser ausnutzbar ist und der Installationsaufwand für die elektrischen und pneumatischen Verbindungen eine erhebliche Reduktion erfährt. Des weiteren ist eine Senkung der Lagerhaltungskosten mit einfachen Mitteln anzustreben, wobei ein hoher Grad an Standardisierung erzielt werden soll. Die Steueranordnung soll allen Sicherheitsanforderungen, welche bekannte Systeme mit separaten Geräten erfüllen, gerecht werden.

Die erfindungsgemäße Lösung ist durch die Merkmale des Anspruchs 1 charakterisiert. Vorteilhafte Ausgestaltungen sind in den Unteransprüchen wiedergegeben.

Die Steueranordnung für ein Bremssystem mit mindestens zwei Druckkreisen - einem ersten, elektro-pneumatischen Druckkreis und einem zweiten, mechanisch betätigbaren Druckkreis - für den Einsatz in Fahrzeugen umfasst eine Bremswertgebereinrichtung, eine elektronische Steuereinrichtung, eine Betriebsbremsventileinrichtung und ein Druckregelmodul. Diese einzelnen Elemente beziehungsweise Baueinheiten sind zu einer zentralen Baueinheit in Form eines Zentralmoduls zusammengefasst. Diese Zusammenfassung erfolgt dabei durch die räumlich nahe Anordnung der einzelnen Elemente. Für die Zusammenfassung der einzelnen Elemente zu einem Zentralmodul - der Elemente der elektro-pneumatischen Drucksteuerung und der mechanisch- pneumatischen Drucksteuerung -besteht eine Vielzahl von Möglichkeiten. Die einzelnen Elemente können dabei
a) durch Aneinanderanflanschen ihrer Gehäuse oder
b) Integration einer Mehrzahl von Komponenten in einem gemeinsamen Gehäuse oder
c) Integration von Komponenten in einem gemeinsamen Gehäuse und Anflanschen der restlichen Komponenten am gemeinsamen Gehäuse
miteinander zu einer baulichen Einheit zusammengefasst werden.

Dies bietet den Vorteil, dass die Steueranordnung für ein Bremssystem mit wenigstens einem elektro-pneumatischen und wenigstens einem mechanisch-pneumatischen Druckkreis als selbständig handelbare Baueinheit ausführbar ist und der Aufwand für erforderliche Verkabelungen vor Ort am Fahrzeug erheblich reduziert werden kann, da die einzelnen Verbindungsleitungen - für Betriebsmittel und elektrische Verbindungsleitungen - bereits mit im Zentralmodul integriert sind. Die erforderliche Leitungslänge wird erheblich minimiert. Bezüglich der räumlichen Zuordnung der einzelnen Elemente zueinander bestehen ebenfalls eine Vielzahl von Möglichkeiten, welche jedoch im Ermessen des zuständigen Fachmannes liegen.

Unter einer elektronischen Steuereinrichtung wird dabei ein elektronisches Steuergerät, beispielsweise in Form einer ECU verstanden. Die Funktion des Druckregelmoduls besteht darin, den am Bremszylinder erforderlichen Druck einzuregeln. Der Druckregelmodul ist dabei hin- sichtlich seiner Funktion zwischen dem Steuergerät und dem Bremszylinder angeordnet. Dieser umfasst einen sogenannten elektro-pneumatischen Druckmodulator, welcher mit einem Ausgang der elektronischen Steuereinrichtung gekoppelt ist und eine Ventileinrichtung, umfassend eine Steuerkammer und eine Arbeitskammer, wobei der Druckmodulator mit der Steuerkammer gekoppelt ist. Die Arbeitskammer der zum Druckregelmodul gehörenden Ventileinrichtung ist mit dem Bremszylinder gekoppelt. Des weiteren umfaßt das Druckregelmodul Ventileinrichtungen, welche den Druck in der Steuerkammer beeinflussen. Diese Ventileinrichtungen können auf unterschiedliche Art und Weise angesteuert werden. Eine bevorzugte Ausführung besteht in der elektromagnetischen Ansteuerung über die Steuereinrichtung.

Unter einer Betriebsbremsventileinrichtung wird eine Ventileinrichtung verstanden. welche eine Arbeitskammer und einen, in dieser führbaren Kolben als Stelleinrichtung zur Beeinflussung des Druckes in der Arbeitskammer umfasst, wobei die Arbeitskammer ebenfalls mit dem Bremszylinder und einer Druckmittelquelle gekoppelt ist. Die Ansteuerung der Betriebsbremsventileinrichtung erfolgt durch Betätigung eines mit dem Kolben gekoppelten Betätigungselementes entsprechend eines Fahrerwunsches nach Erzeugung eines bestimmten Bremsmomentes, insbesondere beim Ausfall der Elektronik.

In einer besonders vorteilhaften Ausgestaltung sind die zum Druckregelmodul gehörige Ventileinrichtung und die Betriebsbremsventileinrichtung in einer Ventileinheit zusammengefasst. Die Integration beider Ventileinrichtungen in einer Ventileinheit erfolgt dabei unter Ausnutzung einer gemeinsamen Arbeitskammer sowie mindestens eines gemeinsamen Anschlusses der Arbeitskammer mit einer Druckmittelquelle oder Druckmittelsenke und mindestens eines Anschlusses von der Arbeitskammer zum Verbraucher, insbesondere einem Betriebsbremszylinder. Die Ventileinheit ist dabei wie folgt aufgebaut:
In einem Gehäuse ist eine erste Kammer vorgesehen. In dieser ist ein Kolbenelement in Form eines Relaiskolbens verschiebbar geführt, vorzugsweise an einer Gehäuseinnenwand. Dieser unterteilt die erste Kammer in zwei, in ihrer Größe veränderliche Teilkammem -eine Arbeits- und eine Steuerkammer. Der Arbeitskammer ist mindestens ein Anschluss an eine Druckmittelquelle oder Senke über eine Einrichtung zur Beeinflussung der Druckmittelzufuhr zwischen Druckmittelquelle und Arbeitskammer, vorzugsweise in Form einer elastischen Manschette zugeordnet. Diese bildet mit einer Gehäuseinnenwand ein Ventil, insbesondere ein Relaisventil, wobei die Gehäuseinnenwand einen Ventilsitz bildet und die Manschette das Ventilglied. Der Relaiskolben bildet für beide Druckkreise die Stelleinrichtung für das Relaisventil zwischen Arbeitskammer und Druckmittelquelle bzw. Senke. Der Druck im elektro-pneumatischen Druckkreis wird über den Druckmodulator eingeregelt. Dazu wird die Steuerkammer mit Druck beaufschlagt, welcher von dieser Seite auf den Relaiskolben wirkt. Zur Beeinflussung des Druckes in der Steuerkammer sind neben dem elektropneumatischen Druckregelmodulator zwei Ventileinrichtungen vorgesehen, welche den Druck in den einzelnen durch den Relaiskolben unterteilten Teilkammem - der Steuerkammer und der Arbeitskammer - beeinflussen beziehungsweise eine Verbindung zwischen Steuerkammer und Schalldämpfer oder Umgebung zum Druckabbau ermöglichen. Die Bewegung des mit dem Bremspedal verbundenen Betätigungselementes wird mit dem integrierten Bremswertgeber sensiert und gibt somit den Fahrerwunsch bezüglich der Erzeugung eines bestimmten Bremsmomentes an die Steuereinrichtung weiter, insbesondere einem Eingang der Steuereinrichtung. Der von der Steuereinrichtung ermittelte beziehungsweise errechnete Druck für die Vorder- oder Hinterachse wird dabei über die Ventileinrichtungen über die Steuerkammer in der Arbeitskammer der Ventileinheit eingesteuert. Der Relaiskolben regelt pneumatisch den Druck in der Arbeitskammer ein, welcher zu den Bremszylindem und in einer weiteren Ausführung auch unter einen, mit dem Betätigungselement gekoppelten Pedalkraftkolben geführt wird. Dieser stützt sich über mindestens eine Federeinrichtung am gemeinsamen Gehäuse, insbesondere an einer Gehäusewand einer weiteren Kammer im gemeinsamen Gehäuse ab. Dabei ist dieser in einer Druckkammer angeordnet, welche mit der Arbeitskammer gekoppelt ist. Bei Ausfall der elektronischen Druckregelung baul sich der Druck am Pedalkraftkolben von Seiten der Arbeitskammer ab. Der Fahrer spürt dabei durch die direkte Kopplung des Betätigungselementes mit dem Pedalkraftkolben nur noch eine geringe Gegenkraft am Pedal. Betätigt er nun das Pedal weiter, setzt ein mit dem Pedalkraftkolben gekoppelter Stößel auf dem Relaiskolben auf und betätigt diesen nunmehr rein mechanisch. Durch die direkte mechanische Kopplung besteht die Möglichkeit, den Druck kraftgesteuert von Seiten des Fahrers einzuregeln. Die Zusammenfassung und gemeinsame Nutzung der wesentlichen Elemente der einzelnen Ventileinrichtungen - Ventileinrichtung des Druckregelmoduls und Betriebsbremsventileinrichlung -in einer Ventileinheit bietet den Vorteil der Schaffung einer sehr kompakten multifunktionalen Ventileinheit mit einer geringen Anzahl von Bauelementen. Zusätzliche Verbindungen zwischen beiden Ventileinrichtungen können entfallen.

Unter einem weiteren Aspekt der Erfindung wird bei Kombination der beiden Ventileinrichtungen beziehungsweise Zusammenfassung in einer Ventileinheit der in der Arbeitskammer erzeugte Druck bei etektro-pneumatischer Betätigung zur Erzeugung der Gegenkraft am Bremspedal genutzt, indem dieser Druck auf eine Kolbenfläche geleitet wird, welche der Bewegungsrichtung der Betätigung entgegenwirkt. Dazu ist die Arbeitskammer mit der Kammer, in welcher der Pedalkraftkolben geführt ist, insbesondere der Druckkammer verbunden, beispielsweise über eine Verbindungsleitung zwischen Arbeitskammer und Druckkammer oder eine Öffnung. Durch die gezielte Auslegung der Flächenverhältnisse am Kolben besteht die Möglichkeit, das zur Erzeugung des Backupdruckes mehr, weniger oder gleich viel Kraft bei der mechanischen Betätigung aufgewendet werden muss, wie bei der elektrisch gesteuerten Bremse, wobei die Auslegung der Flächenverhältnisse zur Ausbildung beliebiger Charakteristiken der Pedalkraft kundenspezifisch erfolgen kann.

Zur Bildung des Zentralmoduls werden bei Vorsehen der kombinierten Ventileinheit die Bremswertgebereinrichtung, die elektronische Steuereinrichtung und die einzelnen zur Steuerung erforderlichen zusätzlichen Ventileinrichtungen entweder am Gehäuse der Ventileinheit angeflanscht oder in einer anderen Art und Weise befestigt oder aber mit der Ventileinheit in einem gemeinsamen Gehäuse integriert. Vorzugsweise wird jedoch bezüglich der Zugänglichkeit die erste Variante gewählt.

Bei Ausführung von getrennten Ventileinrichtungen - Betriebsbremsventileinrichtung und Ventileinrichtung des Druckregelmoduls - können beide Ventileinrichtungen in einem gemeinsamen Gehäuse integriert sein, wobei die weiteren zum Zentralmodul gehörenden Einheiten - Steuereinrichtung, Druckmodulator und Ventileinrichtungenam Gehäuse angeordnet sind. Denkbar ist jedoch auch hier eine Ausführung mit Integration in einem gemeinsamen Gehäuse.

Die erfindungsgemäße Lösung wird nachfolgend anhand von Figuren erläutert. Darin ist im einzelnen folgendes dargestellt:
Figur 1a und 1b verdeutlichen in schematisch stark vereinfachter Darstellung grundlegende Möglichkeiten der erfindungsgemäßen Zusammenfassung der einzelnen Elemente der Steuervorrichtung in einem Zentralmodul;
Figur 2 verdeutlicht in schematisch vereinfachter Darstellung das Grundprinzip einer besonders vorteilhaften Ausgestaltung der Zusammenfassung der einzelnen Komponenten der elektro-pneumatischen Drucksteuerung und der rein pneumatischen Drucksteuerung zu einer Ventileinheit in der Steuervorrichtung.

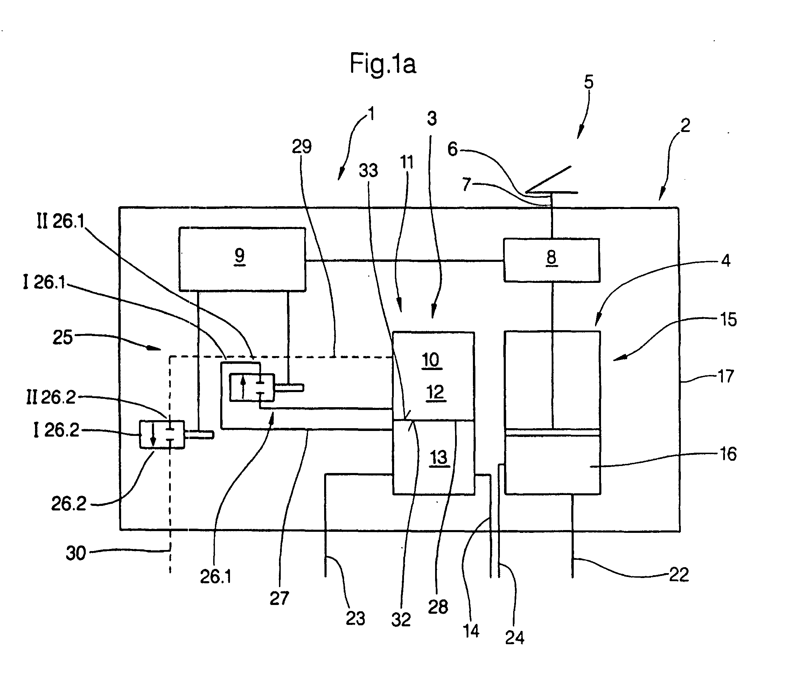

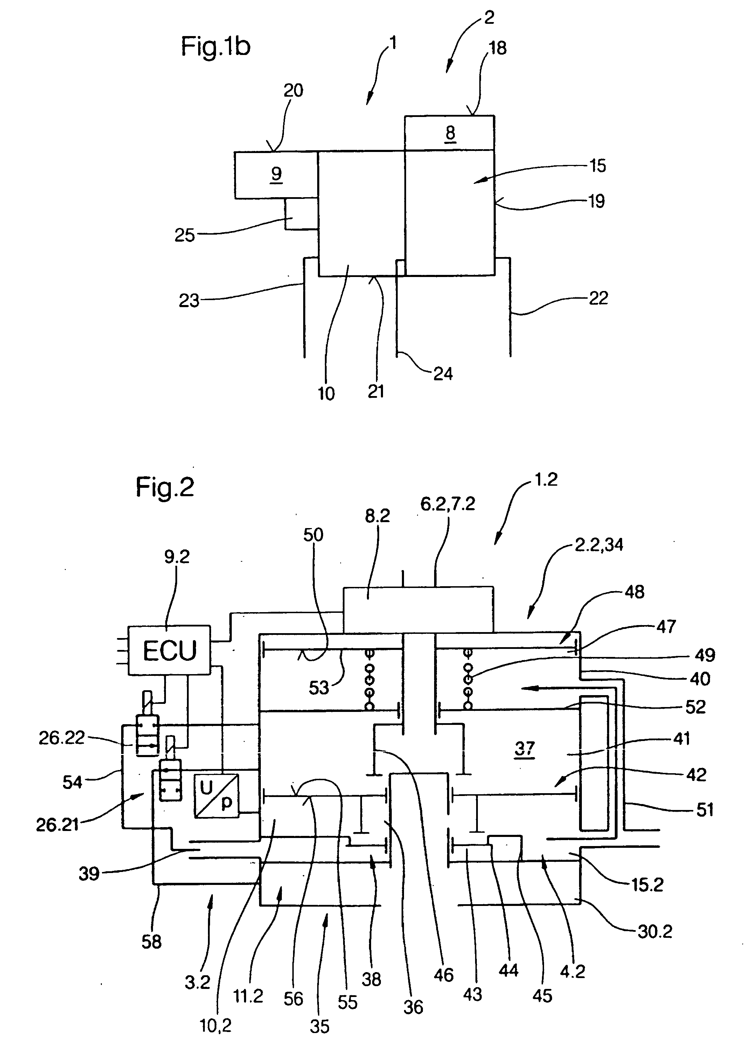

Die Figuren 1a und 1b verdeutlichen in schematisch stark vereinfachter Darstellung Möglichkeiten der erfindungsgemäßen Ausgestaltung einer Steuervorrichtung 1 für ein Bremssystem, insbesondere für ein Fahrzeugbremssystem, in Form eines Zentralmoduls 2. Die Aufgabe der Steuervorrichtung 1 besteht dabei darin, den aus einem Fahrerwunsch nach Bereitstellung eines Bremsmomentes bestimmter Größe erforderlichen Druck einzustellen, zu steuern oder zu regeln. Unter Steuervorrichtung wird dabei die Gesamtheit aus Steuergeräten und Stellgliedem. einschließlich der Verbindungen zwischen diesen verstanden. Die Steuervorrichtung 1 umfasst einen ersten, elektro-pneumatischen Druckkreis 3 und einen zweiten, mechanisch-pneumatischen Druckkreis 4. Dabei bedeutet elektro-pneumatisch, dass die Erzeugung des am entsprechenden Stellglied des Bremssystems, beispielsweise am Betriebsbremszylinder erforderlichen Druckes pneumatisch und die Einstellung bzw. Steuerung oder Regelung elektronisch erfolgen. Mechanisch-pneumatisch beinhaltet die Erzeugung des erforderlichen Druckes pneumatisch und die Einstellung bzw. Steuerung oder Regelung mechanisch. Des weiteren sind mindestens eine Einrichtung 5 zur Vorgabe eines Fahrerwunsches nach Bereitstellung bzw. Erzeugung eines Bremsmomentes bestimmter Größe, im allgemeinen ein vom Fahrer bedienbares Betätigungselement 6 und Übertragungselemente, beispielsweise in Form eines Betätigungsstößels 7, welcher mit einem Bremswertgeber 8 gekoppelt ist, vorgesehen. Der erste, elektro-pneumatische Druckkreis 3 umfasst eine Steuereinrichtung 9 und einen Druckregelmodul 10. Die Funktion des Druckregelmoduls 10 besteht darin, den am Betriebsbremszylinder erforderlichen Druck einzuregeln. Das Druckregelmodul 10 ist hinsichtlich seiner Funktion zwischen der Steuereinrichtung 9 und dem Betriebsbremszylinder angeordnet. Der Druckregelmodul 10 umfasst mindestens eine elektro-pneumatisch steuerbare Ventileinrichtung 11, umfassend wenigstens eine Steuerkammer 12 und eine Arbeitskammer 13, welche mit einem, hier im einzelnen nicht dargestellten Betriebsbremszylinder über einen Anschluss 14 koppelbar ist. Die Steuereinrichtung 9 kann dabei in Form eines Steuergerätes ausgeführt sein. Der zweite, pneumatischen Druckkreis 4 umfasst eine mechanisch betätigbare Betriebsbremsventileinrichtung 15, umfassend eine Arbeitskammer 16, die mit dem Betriebsbremszylinder koppelbar ist, beispielsweise über den Anschluss 22. Erfindungsgemäß sind Bremswertgeber 8, die Betriebsbremsventileinrichtung 15 mit mindestens einkreisiger Backup-Funktion, die Steuereinrichtung 9 und der Druckregelmodul 10 zu einer baulichen Einheit in Form des Zentralmoduls 2 zusammengefasst. Die Zusammenfassung der einzelnen Elemente erfolgt durch die räumlich nahe Anordnung der einzelnen Elemente-Bremswertgeber 8, Betriebsbremsventileinrichtung 15, Steuereinrichtung 9 und Druckregelmodul 10. Die einzelnen Elemente können dabei gemäß Figur 1 a in einem gemeinsamen Gehäuse, hier schematisch angedeutet und mit 17 bezeichnet, integriert sein, oder aber gemäß Figur 1 b durch aneinander Anflanschen der einzelnen Elemente Bremswertgeber 8, Steuereinrichtung 9, Druckregelmodul 10 und Betriebsbremsventileinrichtung 15 im Bereich von deren Außengehäuse - für den Bremswertgeber 8 mit 18, die Betriebsbremsventileinrichtung 15 mit 19, die Steuereinrichtung 9 mit 20 und den Druckregelmodul 10 mit 21 bezeichnet -realisiert werden. Die Betriebsbremsventileinrichtung 15 und der Druckregelmodul 10 werden im dargestellten Fall zur Verdeutlichung von separaten Bauelementen gebildet. Der Druckregelmodul 10 enthalt dabei im dargestellten Fall keine Steuerelektronik, diese ist in der Steuereinrichtung 9 enthalten. Denkbar ist jedoch auch, dass bereits im oder am Druckregelmodul 10 die Steuereinrichtung 9 oder zumindest ein Teil von dieser angeordnet ist.

Der Ventileinrichtung 11 des Druckregelmoduls 10 sind zur Steuerung des Druckes in der Steuerkammer 12 zur der Einsteuerung des Druckes in der Arbeitskammer 13 mindestens zwei Ventileinrichtungen, eine erste Ventileinrichtung 26.1 und eine zweite Ventileinrichtung 26.2 zur Steuerung zugeordnet. Die beiden Ventileinrichtungen - erste Ventileinrichtung 26.1 und zweite Ventileinrichtung 26.2 -sind dabei in den Leitungsverbindungen 27 zwischen den mittels eines Ventilkolbens 28 der Ventileinrichtung 11 in Steuerkammer 12 und Arbeitskammer 13 unterteilten Kammern und in einer Leitungsverbindung 29 zwischen Steuerkammer 12 und einem Schalldämpfer 30 angeordnet. Die beiden Ventileinrichtungen - erste Ventileinrichtung 26.1 und zweite Ventileinrichtung 26.2 -sind beispielsweise als 1/2-Wegeventile ausgeführt, welche vorzugsweise elektromagnetisch betätigt, insbesondere über die Steuereinrichtung 9 angesteuert werden. Die erste Funktionsstellung I_{26.1} der ersten Ventileinrichtung 27.1 dient dabei der Steuerung des Druckes. Die zweite Stellung II_{26.1} der ersten Ventileinrichtung 26.1 dient dabei dem Druckabbau an der Kolbenfläche 33, welche zu einem Druckaufbau an der Kolbenfläche 32 führt. Die zweite Ventileinrichtung 26.2 dient der Verminderung des Druckes in der Steuerkammer 12, welcher auf die zweite Kolbenfläche 33 wirkt. Diese wird über eine Druckentlastungseinrichtung in Form eines Schalldämpfers 30 entlastet. Der Druck in der Arbeitskammer 13 wird am Betriebsbremszylinder wirksam. Des weiteren erkennbar in der Figur 1 a ist der Anschluss 24 der Betriebsbremsventileinrichtung 15 mit einer Druckmittelquelle oder Senke.

In einer besonders vorteilhaften Weiterentwicklung einer Ausführung gemäß der Figur 1 a und 1 b werden Bauelemente des Druckregelmoduls 10.2 und der Betriebsbremsventileinrichtung 15.2 zusätzlich einer baulichen Einheit 34 zusammengefasst, wie in Figur 2 dargestellt, welche bei Zusammenfassung mit dem Bremswertgeber 8.2 als Zentralmodul 2.2 bezeichnet wird. Die Funktion der einzelnen Komponenten entspricht denen in Figur 1a bzw. 1b. Für gleiche Elemente werden daher die gleichen Bezugszeichen verwendet.

Anstatt für jeden Druckkreis - erster, elektro-pneumatischer Druckkreis 3.2 und zweiter, mechanisch-pneumatischer Druckkreis 4.2 - eine eigene Ventileinrichtung zu verwenden, werden die elektro-pneumatisch steuerbare Ventileinrichtung 11.2 des Druckregelmoduls 10.2 gemäß Figur 1 a sowie die Betriebsbremsventileinrichtung 15.2 zu einer kombinierten Ventileinheit 35 zusammengefasst. Dies bedeutet, dass die in den Figuren 1 a und 1 b dargestellten Arbeitskammer 13 für die Ventileinrichtung 11 des Druckregelmoduls 10 und die Arbeitskammer 16 für die Betriebsbremsventileinrichtung 15 von einer gemeinsam für beide Funktionen nutzbaren Arbeitskammer 36 gebildet werden. Die Ventileinheit 35 beinhaltet des weiteren eine Steuerkammer 37, diese entspricht der Steuerkammer 12 der Ventileinrichtung 11 gemäß Figur 1 a. Die Arbeitskammer 36 ist über ein Relaisventil 38 mit einer Drucksenke oder Druckmittelquelle über den Anschluss 39 verbindbar. Der Anschluss 39 bzw. die daran anschließende Verbindungsleitung bildet die Zusammenfassung der Anschlüsse 23 der elektro-pneumatischen Ventileinrichtung 11 zur Kopplung mit einer Druckmittelquelle oder Senke gemäß der Figur 1 a und des Anschlusses 24 des Betriebsbremsventils 15 mit einer Druckmittelsenke oder Druckmittelquelle. Die bauliche Einheit 34, insbesondere der Zentralmodul 2.2 umfasst dazu ein Gehäuse 40, in welchem in einer ersten Kammer 41 ein Relaiskolben 42, welcher die Funktion des Kolbens 28 der Ventileinrichtung 11 und die Funktion des Kolbens der Betriebsbremsventileinrichtung 15 gemäß der Ausführung in Figur 1 a übernimmt. Der Relaiskolben 42 ist verschiebbar in der Kammer 41 geführt und unterteilt diese in die Steuerkammer 37 für die Funktion der Ventileinrichtung 11 und die Arbeitskammer 36 zur Beaufschlagung des Betriebsbremszylinders mit einem Druck. Der Relaiskolben 42 dient dabei der Betätigung des Relaisventils 38. Dieses wird von einem bewegbaren Manschettenteil 43 als Ventilglied und einem Ventilsitz 44, beispielsweise in Form einer Gehäuseinnenwand 45, gebildet. In der ersten Kammer 41 ist ein weiterer Kolben geführt, welcher auf den Relaiskolben 42 einwirkt und mit dem Betätigungselement 6.2, insbesondere dem Betätigungsstößel 7.2 verbunden ist. Dieser wird als Betätigungskolben 46 bezeichnet. Um den Backupdruck bei Ausfall der elektronischen Druckregelung kraftgesteuert einregeln zu können ist eine weitere zweite Kammer 47 vorgesehen, in welcher ein Pedalkraftkolben 48 geführt ist und über mindestens eine Federeinheit 49 vorgespannt ist. Dieser ist mit dem Betätigungskolben 46 derart verbunden, dass eine Bewegung des Pedalkraftkolbens 48 eine Zwangsverschiebung des Betätigungskolbens 46 in der gleichen Richtung, d.h. zum Relaiskolbens 42 oder entgegen bewirkt. Zusätzlich zur Federvorspannung wird die in Richtung des Relaiskolbens 42 weisende Kolbenfläche 50 des Pedalkraftkolbens 48, das heißt die bei Betätigung des Betätigungselementes 6.2, insbesondere des Betätigungsstößels 7.2 in Richtung des Relaiskolbens 42 gerichtete Fläche 50 mit Druck aus der Arbeitskammer 36 beaufschlagt. Zu diesem Zweck ist eine Verbindungsleitung 51 zwischen der Arbeitskammer 36 und der zweiten Kammer 47 vorgesehen, wobei deren Einmündung in die zweite Kammer 47 zwischen Pedalkraftkolben 45 und der Gehäusewand 52 erfolgt, an welcher sich die Federeinheit 49 abstützt, so das der in der Kammer 47 enthaltene Druck, welcher dem Druck im Betriebsbremszylinder proportional ist, der Betätigung des Betätigungsstößel 7.2 entgegengerichtet ist. Des weiteren im selben Gehäuse 40 untergebracht, ist eine dritte Kammer 53, welche der Entlastung dient und einen Schalldämpfer 30.2 beinhaltet. Der baulichen Einheit 34 des weiteren zugeordnet sind die beiden Ventileinrichtungen 26.21 und 26.22, welche der Steuerung der kombinierten Ventileinrichtung 35 im ersten, elektro-pneumatischen Druckkreis 3.2 dienen. Auf die Funktion wird im nachfolgenden im Einzelnen eingegangen. Grundsätzlich werden zwei unterschiedliche Betriebsweisen unterschieden - die elektro-pneumatischen Drucksteuerung und die rein pneumatische Drucksteuerung bei Betätigung des Betätigungselementes 6.2, wobei letztgenannte Drucksteuerung beim Ausfall der Elektronik zum Tragen kommt. Im ersten Fall wird der am Betriebsbremszylinder erforderliche Druck über den ersten, elektro-pneumatischen Druckkreis 3.2 erzeugt, während im zweiten Fall der am Betriebsbremszylinder erforderliche Druck über den zweiten, mechanisch-pneumatischen Druckkreis 4.2 eingestellt wird. Zur elektro-pneumatischen Steuerung bzw. Einstellung des Druckes am Betriebsbremszylinder bei Vorliegen eines Fahrerwunsches zur Erzeugung eines bestimmten Bremsmomentes durch Betätigung eines Betätigungselementes 6.2 am Betätigungsstößel 7.2, beispielsweise in Form eines Weges oder Druckes, wird über den Bremswertgeber 8.2 an der Steuereinrichtung 9.2 mindestens eine, den Fahrerwunsch nach Erzeugung eines bestimmten Bremsmomentes wenigstens mittelbar charakterisierende Größe sensiert. Diese wird einem Eingang der Steuereinrichtung 9.2 zugeführt. Die Steuereinrichtung 9.2, welche in Form eines Steuergerätes ausgeführt ist und beispielsweise mindestens einen Microprozessor beinhaltet, berechnet dann den am Betriebsbremszylinder bereitzustellenden erforderlichen Druck, welcher mittels der beiden Ventileinrichtungen 26.21 und 26.22 in der Steuerkammer 37 der kombinierten Ventileinheit 34 eingeregelt und über den Anschluss bzw. die Verbindungsleitung 57 dem Betriebsbremszylinder zur Verfügung gestellt wird. Über den Relaiskolben 42 wird dann der Druck in der Arbeitskammer 36 eingeregelt. Gleichzeitig wird dieser Druck am Pedalkraftkolben 48 in der Kammer 47 wirksam. Die Beaufschlagung erfolgt dabei auf der von der Betätigung des Betätigungsstößels 7.2 weg gerichteten Kolbenfläche 53 am Pedalkraftkolben 48. Dadurch wird im elektro-pneumatischen Betrieb am Bremswertgeber 8.2 auf Grund des am Pedalkraftkolben 48 wirksam werdenden Druckes eine zu Betätigung des Betätigungsstößels 7.2 proportionale Gegenkraft erfassbar und zur Beschreibung des Fahrerwunsches, das heißt zur Bildung des Eingangssignals an der Steuereinrichtung 9.2 erzeugbar.

In der zweiten Betriebsweise, der rein pneumatischen Drucksteuerung, welche bei Ausfall der Elektronik zum Tragen kommt, wird der zweite, mechanisch-pneumatischen Druckkreis 4.2 aktiviert. Die Betätigung des Relaiskolbens 42 erfolgt rein mechanisch. Zu diesem Zweck ist der Betätigungsstößel 7.2 und der mit diesem gekoppelten Pedalkraftkolben 48 mit dem Betätigungskolben 46, welcher als Betätigungsstößel für den Relaiskolben 42 fungiert, verbunden. Dabei besteht die Möglichkeit durch Auslegung der Größe der Kolbenfläche am Pedalkraftkolben 48 insbesondere der Kolbenfläche 53, den Backupdruck entsprechend den Einsatzerfordernissen einzustellen.

Der Druckregelmodul 10.2 umfasst in Figur 2 die Ventileinrichtungen 26.21 und 26.22, wobei der Ventileinrichtung 26.2 die Steuerung des Druckes in der Steuerkammer 37 obliegt. Zu diesem Zweck ist diese in der Verbindungsieitung 54 zwischen der Steuerkammer 37 und der angeordnet, die der Versorgung der Steuerkammer 37 mit Druckmittel dient, während die Ventileinrichtung 26.2 der Entlastung der Steuerkammer 37, insbesondere im Schalldämpfer 30.2 dient. Die beiden Ventileinrichtungen - erste Ventileinrichtung 26.21 und zweite Ventileinrichtung 26.22 sind als 1/2 - Wegeventile ausgeführt, welche vorzugsweise elektromagnetisch betätigt und über die Steuereinrichtung 9.2 angesteuert werden. Die erste Funktionsstellung I_{26.21} der ersten Ventileinrichtung 26.21 dient dabei der Steuerung des Druck. Der in der Steuerkammer 37 an der ersten Kolbenfläche 55 des Relaiskolbens 42 wirkende Druck kann über die erste Ventileinrichtung 26.21 und die Leitungsverbindung 5 in der Steuerkammer 37 abgebaut werden. Die zweite Stellung II_{26.21} der ersten Ventileinrichtung 26.21 dient dabei dem Halten der Drücke an beiden Kolbenflächen 55, 56 des Relaiskolbens 42. Die zweite Ventileinrichtung 26.22 dient der des Druckes in der Steuerkammer 37, welche auf die erste Kolbenfläche 55 des Relaiskolbens 42 wirkt.

### Bezugszeichenliste

- 1, 1.2: Steuervorrichtung
- 2, 2.2: Zentralmodul
- 3, 3.2: elektro-pneumatischer Druckkreis
- 4, 4.2: mechanisch-pneumatischer Druckkreis
- 5: Einrichtung zur Vorgabe eines Fahrerwunsches nach Erzeugung eines Bremsmomentes bestimmter Größe
- 6, 6.2: Betätigungselement
- 7, 7.2: Betätigungsstößel
- 8, 8.2: Bremswertgeber
- 9, 9.2: Steuereinrichtung, Steuergerät
- 10, 10.2: Druckregelmodul
- 11, 11.2: elektro-pneumatisch steuerbare Ventileinrichtung
- 12: Steuerkammer
- 13: Arbeitskammer
- 14: Anschluss von der Arbeitskammer 13 zur Kopplung mit dem Betriebsbremszylinder
- 15, 15.2: Betriebsbremsventileinrichtung
- 16: Arbeitskammer
- 17: Gehäuse
- 18: Gehäuse des Bremswertgebers
- 19: Gehäuse der Betriebsbremsventileinrichtung
- 20: Gehäuse der Steuereinrichtung
- 21: Gehäuse des Druckregelmoduls
- 22: Anschluss der Betriebsbremsventileinrichtung zur Kopplung mit einem Verbraucher, insbesondere einem Betriebsbremszylinder
- 23: Anschluss der elektro-pneumatischen Ventileinrichtung zur Kopplung mit einer Druckmittelquelle oder Senke
- 24: Anschluss der Betriebsbremsventileinrichtung zur Kopplung mit einer Druckmittelquelle oder Senke
- 25: Mittel zur Steuerung des Drucks

- 26.1, 26.12: erste Ventileinrichtung
- 26.2, 26.22: zweite Ventileinrichtung
- 27: Leitungsverbindung
- 28: Ventilkolben
- 29: Leitungsverbindung
- 30, 30.2: Schalldämpfer
- 31: Ventileinrichtung
- 32: Kolbenfläche
- 33: Kolbenfläche
- 34: bauliche Einheit
- 35: kombinierte Ventileinheit
- 36: Arbeitskammer
- 37: Steuerkammer
- 38: Relaisventil
- 39: Anschluss
- 40: Gehäuse
- 41: erste Kammer
- 42: Relaiskolben
- 43: bewegbares Manschettenteil
- 44: Ventilsitz
- 45: Gehäuseinnenwand
- 46: Betätigungskolben
- 47: zweite Kammer
- 48: Pedalkraftkolben
- 49: Federeinheit
- 50: Kolbenfläche
- 51: Verbindungsleitung
- 52: Gehäusewand
- 53: Kolbenfläche
- 54: Verbindungsleitung
- 55: erste Kolbenfläche
- 56: zweite Kolbenfläche
- 57: Verbindungsleitung

## Patentansprüche

1. Anordnung zur Steuerung eines Bremssystems eines Fahrzeugs, insbesondere eines Nutzfahrzeugs mit mindestens einem elektro-pneumatisch betätigten Druckkreis (3; 3.2) und mindestens einem mechanisch-pneumatisch betätigten Druckkreis (4; 4.2) als unterlegte Sicherheitsebene sowie mit
1.2 einer Bremswertgebereinrichtung (5, 6, 7, 8; 8.2) zur Erzeugung wenigstens eines elektrischen Bremsanforderungssignals und wenigstes eines pneumatischen Bremsanforderungssignals in Abhängigkeit von einer Bremsanforderung durch den Fahrer,
1.3 einer elektronischen Steuereinrichtung (9; 9.2), welche in Abhängigkeit des elektrischen Bremsanforderungssignals ein elektrisches Bremswertsignal aussteuert, wobei
1.4 die Bremswertgebereinrichtung (5, 6, 7, 8; 6.2, 7.2, 8.2) und die elektronische Steuereinrichtung (9; 9.2) zu einer baulichen Einheit (2; 2.2) zusammengefaßt sind, **dadurch gekennzeichnet, daß** zusätzlich
1.5 ein Druckregelmodul (10; 10.2) zur Einregelung eines Bremsdrucks in wenigstens einen Bremszylinder in Abhängigkeit des elektrischen Bremswertsignals und
1.6 eine Betriebsbremsventileinrichtung (15; 15.2) zur Erzeugung eines Bremsdrucks in Abhängigkeit von dem pneumatischen Bremsanforderungssignal ebenfalls in der baulichen Einheit (2; 2.2) integriert sind.

2. Anordnung (1: 1.2) nach Anspruch 1, **dadurch gekennzeichnet, daß** das Druckregelmodul (10; 10.2) und die Steuereinrichtung (9; 9.2) eine integrale Baueinheit bilden.

3. Anordnung (1; 1.2) nach Anspruch 1 oder 2, **dadurch gekennzeichnet, daß** die elektronische Steuereinrichtung (9), die Bremswertgebereinrichtung (5, 6, 7, 8), das Druckregelmodul (10) und die Betriebsbremsventileinrichtung (15) in einem gemeinsamen Gehäuse (17) angeordnet sind.

4. Anordnung (1; 1.2) nach Anspruch 1 oder 2, **dadurch gekennzeichnet, daß** die elektronische Steuereinrichtung (9; 9.2), die Bremswertgebereinrichtung (5, 6, 7, 8; 6.2, 7.2, 8.2), das Druckregelmodul (10; 10.2) und/oder die die Betriebsbremsventileinrichtung (15, 15.2) jeweils im Bereich ihrer Gehäuse (18, 19, 20, 21) aneinander befestigt, insbesondere aneinander angeflanscht sind.

5. Anordnung (1; 1.2) nach wenigstens einem der vorhergehenden Ansprüche, **gekennzeichnet durch** die folgenden Merkmale:
5.1 das Druckregelmodul (10; 10.2) umfasst mindestens eine steuerbare Ventileinrichtung (11; 11.2) mit wenigstens einer Steuerkammer (12) und einer Arbeitskammer (13), welche mit wenigstens einem Bremszylinder koppelbar ist;
5.2 die Betriebsbremsventileinrichtung (15; 15.2) umfasst eine mit mindestens einem Bremszylinder koppelbare Arbeitskammer (16);
5.3 die steuerbare Ventileinrichtung (11; 11.2) des elektro-pneumatischen Druckkreises (3; 3.2) und die Betriebsbremsventileinrichtung (15; 15.2) werden von einer Ventileinheit (35) mit einer gemeinsam nutzbaren Arbeitskammer (36) und einem verschiebbaren und diese begrenzenden Kolben in Form eines Relaiskolbens (42) gebildet.

6. Anordnung (1: 1.2) nach Anspruch 5, **gekennzeichnet durch** die folgenden Merkmale:
6.1 die Ventileinheit (35) umfasst eine in einem Gehäuse (40) angeordnete erste Kammer (41), welche mittels des in dieser verschiebbar gelagerten Relaiskolbens (42) in die Arbeitskammer (36) und eine Steuerkammer (37) unterteilt ist;
6.2 die Arbeitskammer (36) ist über ein Relaisventil (38) mit einem Anschluss (39) zu einer Druckmittelquelle oder Druckmittelsenke koppelbar;
6.3 der Arbeitskammer (36) ist ein mit dem Bremszylinder koppelbarer Anschluß (57) zugeordnet.

7. Anordnung (1; 1.2) nach Anspruch 6, **gekennzeichnet durch** die folgenden Merkmale:
7.1 der Relaiskolben (42) bildet eine Stelleinrichtung für das Relaisventil (38);
7.2 das Relaisventil (38) umfasst ein Ventilglied in Form eines bewegbaren Manschettenteiles (43) und einen Ventilsitz (44), welcher von einer Gehäuseinnenwand (45) gebildet wird.

8. Anordnung (1; 1.2) nach Anspruch 7, **gekennzeichnet durch** die folgenden Merkmale:
8.1 dem Relaiskolben (42) ist ein, mit der Bremswertgebereinrichtung (5, 6, 7, 8; 6.2, 7.2, 8.2) gekoppelter Betätigungskolben (46) zugeordnet, welcher in der ersten Kammer (41) verschiebbar gegenüber dem Relaiskolben (42) geführt ist, wobei die Verschiebbarkeit den Kontakt mit dem Relaiskolben (42) und eine gemeinsame Verschiebbarkeit mit diesem einschließt.

9. Anordnung (1; 1.2) nach einem der Ansprüche 5 bis 8, **gekennzeichnet durch :**
9.1 einen mit der Bremswertgebereinrichtung (5, 6, 7, 8; 6.2, 7.2, 8.2) gekoppelten Pedalkraftkolben (48);
9.2 eine verschiebbare Lagerung des Pedalkraftkolbens (48) im Gehäuse (40) in einer weiteren zweiten Kammer (47);
9.3 eine Abstützung des Pedalkraftkolbens (48) über eine Federeinheit (49) an einer Gehäuseinnenwand des Gehäuses.

10. Anordnung (1; 1.2) nach einem der Ansprüche 5 bis 9, **gekennzeichnet durch** die folgenden Merkmale:
10.1 das Druckregelmodul (10; 10.2) umfasst zwei Steuerventile (26.1, 26.2; 26.21 26.22);
10.2 die Steuerventile (26.1, 26.2; 26.21, 26.22) sind in Verbindungsleitungen (54) zwischen Arbeitskammer (36) und Steuerkammer (37) und Steuerkammer (37) und Umgebung oder einem Schalldämpfer (30; 30.2) angeordnet.

## Claims

1. System for controlling a brake system of a vehicle, in particular a heavy-duty vehicle, comprising at least one pressure circuit (3; 3.2) for electro-pneumatic operation and at least one pressure circuit (4; 4.2) for mechanical-pneumatic operation as lower-priority safety level, as well as
1.2 a brake value generator means (5, 6, 7, 8; 8.2) for generating at least one electrical brake demand signal and at least one pneumatic brake demand signal as a function of a brake demand issued by the driver,
1.3 an electronic control means (9; 9.2) that modulates an electrical brake value signal as a function of said electrical brake demand signal, wherein
1.4 said brake value generator means (5, 6, 7, 8; 6.2, 7.2, 8.2) and said electronic control means (9; 9.2) are combined in one structural unit (2; 2.2), **characterised in that** additionally
1.5 a pressure regulator module (10; 10.2) for controlling a brake pressure in at least one brake cylinder as a function of said electrical brake value signal, and
1.6 a service brake valve means (15; 15.2) for generating a brake pressure as a function of said pneumatic brake demand signal are equally integrated into said structural unit (2; 2.2).

2. System (1; 1.2) according to Claim 1, **characterised in that** said pressure regulator module (10; 10.2) and said control means (9; 9.2) constitute one integral structural unit.

3. System (1; 1.2) according to Claim 1 or 2, **characterised in that** said electronic control means (9), said brake value generator means (5, 6, 7, 8), said pressure regulator module (10) and said service brake valve means (15) are arranged in a common housing (17).

4. System (1; 1.2) according to Claim 1 or 2, **characterised in that** said electronic control means (9; 9.2), said brake value generator means (5, 6, 7, 8; 6.2, 7.2, 8.2), said pressure regulator module (10; 10.2) and/or said service brake valve means (15, 15.2) are each fastened on each other, in particular flange-mounted on each other, in the zone of their housings (18, 19, 20, 21).

5. System (1; 1.2) according to at least one of the preceding Claims, **characterised by** the following features:
5.1 said pressure regulator module (10; 10.2) comprises at least one controllable valve means (11; 11.2) having at least one control chamber (12) and one working chamber (13) that is adapted for coupling to at least one brake cylinder;
5.2 said service brake valve means (15; 15.2) comprises an working chamber (16) adapted for coupling to at least one brake cylinder;
5.3 said controllable valve means (11; 11.2) of said electro-pneumatic pressure circuit (3; 3.2) and said service brake valve means (15; 15.2) are formed by a valve unit (35) including a commonly usable working chamber (36) and a displaceable plunger defining said working chamber, which is designed in the form of a relay plunger (42).

6. System (1; 1.2) according to Claim 5, **characterised by** the following features:
6.1 said valve unit (35) comprises a first chamber (41) disposed in a housing (40), which is subdivided into said working chamber (36) and a control chamber (37) by said relay plunger supported therein for displacement;
6.2 said working chamber (36) is adapted to be coupled to a connector (39) to a source of pressurised medium or a sink of pressurised medium via a relay valve (38);
6.3 a connector (57) adapted to be coupled to said brake cylinder is associated with said working chamber (36).

7. System (1; 1.2) according to Claim 6, **characterised by** the following features:
7.1 the relay plunger (42) constitutes a means for setting said relay valve (38);
7.2 said relay valve (38) comprises a valve element in the form of a mobile sleeve element (43) and a valve seat (44) that is formed by an internal housing wall.

8. System (1; 1.2) according to Claim 7, **characterised by** the following features:
8.1 an actuator plunger (46) is associated with said relay plunger (42), which is coupled to said brake value generator means (5, 6, 7, 8; 6.2, 7.2, 8.2), which actuator plunger (46) is guided in said first chamber (41) for displacement relative to said relay plunger (42), with the displaceability encompassing the contact with said relay plunger (42) and a displaceability jointly with the latter.

9. System (1; 1.2) according to any of the Claims 5 to 8, **characterised by:**
9.1 a pedal force plunger (48) coupled to said brake value generator means (5, 6, 7, 8; 6.2, 7.2, 8.2);
9.2 a displaceable arrangement of said pedal force plunger (48) in said housing (40) in a further second chamber (47);
9.3 a support of said pedal force plunger (48) via a spring unit (49) on an internal housing wall of said housing.

10. System (1; 1.2) according to any of the Claims 5 to 9, **characterised by** the following features:
10.1 said pressure regulator module (10; 10.2) comprises two control valves (26.1, 26.2; 26.21, 26.22);
10.2 said control valves (26.1, 26.2; 26.21, 26.22) are disposed in connecting lines (54) between said working chamber (36) and said control chamber (37) and between said control chamber (37) and the environment or a muffler (30; 30.2).

## Revendications

1. Système à commander un système de freinage d'un véhicule, en particulier un véhicule lourd, comprenant au moins un circuit de pression (3; 3.2) pour l'opération électropneumatique et au moins un circuit de pression (4; 4.2) pour l'opération mécano pneumatique en tant que niveau à plus basse priorité, et comprenant aussi
1.2 un moyen générateur de la valeur de freinage (5, 6, 7, 8; 8.2) à engendrer au moins un signal électrique de demande de freinage et au moins un signal pneumatique de demande de freinage en fonction d'une demande freinage issu par le conducteur,
1.3 un moyen électronique de commande (9; 9.2) pour la modulation d'un signal électrique de valeur de freinage en fonction dudit signal électrique de demande de freinage, dans lequel
1.4 ledit moyen générateur de la valeur de freinage (5, 6, 7, 8; 6.2, 7.2, 8.2) et ledit moyen électronique de commande (9; 9.2) sont combinés l'un avec l'autre dans une unité structurelle (2; 2.2), **caractérisé en ce qu'**au plus
1.5 un module régulateur de pression (10; 10.2) à commander une pression de freinage dans au moins one cylindre de freinage en fonction dudit signal électrique de valeur de freinage, et
1.6 a moyen à soupape de freinage de service (15; 15.2) à engendrer une pression de freinage en fonction dudit signal pneumatique de demande de freinage sont également intégrés dans ladite unité structurelle (2; 2.2).

2. Système (1; 1.2) selon la revendication 1, **caractérisé en ce que** ledit module régulateur de pression (10; 10.2) et ledit moyen de commande (9; 9.2) constituent une unité structurelle intégrale.

3. Système (1; 1.2) selon la revendication 1 ou 2, **caractérisé en ce que** ledit moyen électronique de commande (9), ledit moyen générateur de la valeur de freinage (5, 6, 7, 8), ledit module régulateur de pression (10) et ledit moyen à soupape de freinage de service (15) sont disposés dans un carter commun (17).

4. Système (1; 1.2) selon la revendication 1 ou 2, **caractérisé en ce que** ledit moyen électronique de commande (9; 9.2), ledit moyen générateur de la valeur de freinage (5, 6, 7, 8; 6.2, 7.2, 8.2), ledit module régulateur de pression (10; 10.2) et/ou ledit moyen à soupape de freinage de service (15, 15.2) sont respectivement l'un à l'autre, en particulier par des flasques, dans la zone de leurs carters (18, 19, 20, 21).

5. Système (1; 1.2) selon au moins une des revendications précédentes, **caractérisé par** les caractéristiques suivantes:
5.1 ledit module régulateur de pression (10; 10.2) comprend au moins un moyen à soupape réglable (11; 11.2) ayant au moins une chambre de commande (12) et une chambre de travail (13) apte à être couplé à au moins un cylindre de freinage;
5.2 ledit moyen à soupape de freinage de service (15; 15.2) comprend un chambre de travail (16) apte à être couplé à au moins un cylindre de freinage;
5.3 ledit moyen à soupape commandable (11; 11.2) dudit circuit de pression (3; 3.2) électropneumatique et ledit moyen à soupape de freinage de service (15; 15.2) sont formés par une unité de soupape (35) renfermant une chambre de travail (36) utilisable en commun et un cône déplaçable, qui définit ladite chambre de travail, qui est conçue sous forme d'un cône de relais (42).

6. Système (1; 1.2) selon la revendication 5, **caractérisé par** les caractéristiques suivantes:
6.1 ladite unité de soupape (35) comprend une première chambre (41) disposée dans un carter (40), qui est divisé en ladite chambre de travail (36) et une chambre de commande (37) par ledit cône de relais y logé de manière déplaçable.
6.2 ladite chambre de travail (36) est apte à être couplée à un connecteur (39) à une source de milieu sous pression ou un puits de milieu sous pression via un soupape de relais (38);
6.3 un connecteur (57) apte à être couplé audit cylindre de freinage est affecté à ladite chambre de travail (36).

7. Système (1; 1.2) selon la revendication 6, **caractérisé par** les caractéristiques suivantes:
7.1 le cône de relais (42) constitue un moyen à ajuster ledit soupape de relais (38);
7.2 ledit soupape de relais (38) comprend un élément de soupape sous forme d'un élément de manchon mobile (43) et une siège de soupape (44), qui est formée par une paroi intérieure du carter.

8. Système (1; 1.2) selon la revendication 7, **caractérisé par** les caractéristiques suivantes:
8.1 un cône de commande (46) est affecté audit cône de relais (42), qui est couplé audit moyen générateur de la valeur de freinage (5, 6, 7, 8; 6.2, 7.2, 8.2), lequel cône de commande (46) est guidé dans ladite première chambre (41) de manière déplaçable relativement audit cône de relais (42), à ladite mobilité renfermant le contact avec ledit cône de relais (42) et la mobilité ensemble avec le dernier.

9. Système (1; 1.2) selon une quelconque des revendications 5 à 8, **caractérisé par**:
9.1 un cône d'effort de pédale (48) couplé audit moyen générateur de la valeur de freinage (5, 6, 7, 8; 6.2, 7.2, 8.2);
9.2 un arrangement déplaçable dudit cône d'effort de pédale (48) dans ledit carter (40) dans une deuxième chambre (47) supplémentaire ;
9.3 un support dudit cône d'effort de pédale (48) via une unité à ressort (49) à une paroi intérieur de carter dudit carter.

10. Système (1; 1.2) selon une quelconque des revendications 5 à 9, **caractérisé par** les caractéristiques suivantes:
10.1 ledit module régulateur de pression (10; 10.2) comprend deux soupapes de commande (26.1, 26.2; 26.21, 26.22);
10.2 lesdits soupapes de commande (26.1, 26.2; 26.21, 26.22) sont disposés dans des conduites de connexion (54) entre ladite chambre de travail (36) et ladite chambre de commande (37) et entre ladite chambre de commande (37) et l'environnement ou un silencieux (30; 30.2).
